# EUROPEAN PATENT APPLICATION

(11) **EP 0 878 231 A1**
(43) Date of publication of application: **18.11.1998**
(21) Application number: 98201526.5
(22) Date of filing: 11.05.1998
(51) Int. Cl.: B01J 19/18, B01F 7/22

(54) **A process vessel and processes conducted therein**

(30) Priority: 12.05.1997 US 854859
(71) Applicant: SHELL INTERNATIONALE RESEARCH MAATSCHAPPIJ B.V., 2596 HR Den Haag (NL)
(72) Inventor: Chen, Ye-Mon, Sugar Land, Texas 77479 (US); Tomaskovic, Robert Stephen, Houston, Texas 77083 (US)

(57) **Abstract**

The invention concerns a process vessel comprising a vertical, hollow vessel (10) having an inlet (22) for the introduction of feed materials for forming a process fluid, an outlet (24) for the discharge of process product and an exhaust for process vapors (26); and an inner wall (16,16a) within said vessel (10), fixedly attached thereto and forming in conjunction therewith at least two process stages, the first stage being disposed in the annulus (19) formed between said inner wall (16,16a) and said vessel (10) with said inlet (22) opening thereinto, the last stage being confined within said inner wall (16,16a) with process product discharging therefrom and toward said outlet (24); the improvement comprising:
means (14) located within said inner wall for driving said process fluid therein downward toward said discharge outlet (24); and a plurality of slots (18,18a) selectively located in said inner wall (16,16a) for allowing passage of said process fluid flowing in said annulus (19) between said process vessel wall (10b) and said inner wall (16,16a) and into the interior of said inner wall (16,16a). It also concerns a polymerization, crystallization and/or devolatization process, wherein the process is conducted in a process vessel as set out above.

## Description

### Field of the Invention

The invention is directed to a process vessel, and to the processes (polymerization, crystallization and/or devolatization) conducted therein particularly for polymerization reactors for polycondensation polymers and, more particularly, to those reactors having inserts or draft tubes.

### Description of the Prior Art

U.S. Patent No. 2,688,646 to Russell discloses a reactor for polyolefins having tubes 7 and 8 for an agitated slurry of fine solid polymerization catalyst wherein a desired interface level may exist (see col. 3, lines 35-38). The liquid product is made to flow upwardly through tubes 7 and 8 and out through exit port 15 (see col. 4, lines 46-62).

U.S. Patent No. 3,170,769 to Stiles et al discloses a reactor used for liquid phase reactions wherein the reactor comprises a plurality of mixers 39. The impeller 46 of mixer 39 propels a formed emulsion upwardly through tubes 41 and then downwardly to exit via holes 53 (see col. 5, lines 49-54).

U.S. Patent No. 4,432,940 to Buyalos et al (hereinafter referred to as "the '940 patent") discloses a polymerization reactor comprising a draft tube 17 having apertures 22 and an impeller 23. The impeller pumps the polymer melt upward through draft tube 17, through apertures 22 and over plates 18, 19 and 20.

U.S. Patent No. 5,536,875 to Roby et al discloses a reactor for organic oxidation reactions in which products or byproducts are in a solid state. The reactor comprises a hollow draft tube 6 having an impeller 9 positioned therein.

U.S. Patent No. 5,096,690 to Saito discloses a reactor having a mixing chamber 1 comprising mixing blades 3 and slits 7 to discharge silver halide grains into an aqueous solution (see col. 2, lines 60+).

The conventional process vessel, including a draft tube reactor, has been applied for years. However, the prior art does not suggest cutting slots in the upper part of the draft tube in order to achieve high surface renewal rate and variable liquid level operation.

### Summary of the Invention

A process vessel, as set out in claim 1. The vessel has a draft tube which includes windows or slots which have been cut therein. The vessel has a draft tube is fixedly positioned within the vessel and is further positioned so that the windows are partially submerged in the process fluid. An agitation system is used to mix and circulate process fluid down the draft tube, and up the annular space where it passes through the windows and back into the draft tube to complete the circulation. Vapor-liquid mass transfer rate is significantly increased by the large surface area generated as process fluid passes through the windows. A two-stage draft tube is also disclosed. The invention is also generally applicable to process operations other than polymerization, such as crystallization and devolatilization, where vapor-liquid mass transfer rate is critical.

### Brief Description of the Drawings

Figure 1 is a prior art reactor having a draft tube.

Figure 2 is a sectional view, taken along lines 2-2 of Figure 3.

Figure 3 is a sectional view, taken along lines 3-3 of Figure 2.

Figure 4 is a sectional view of a second embodiment taken along lines 4-4 of Figure 5.

Figure 5 is a sectional view of a second embodiment taken along lines 5-5 of Figure 4.

### Description of the Preferred Embodiment

Although the following description is directed to polymerization processes, the instant invention is also generally applicable to process operations other than polymerization, such as crystallization and devolatilization, where vapor-liquid mass transfer rate is critical. Likewise, for ease of illustration, the "process vessel" is hereinafter referred to as a "reactor."

Current polyester processes involve polymerization of a diacid and a dialcohol. These processes can be continuous or batch and are normally accomplished by multiple stages of vertical agitated reactors followed by specially designed horizontal reactors. Sufficient mass transfer can be achieved in the esterification and prepolymerization stages of these processes by using conventional vertical agitated reactors because the mass transfer rate is high relative to esterification or condensation reaction rate.

However, in the intermediate and later part of the condensation process, condensation byproducts must be removed as vapor from process fluid of higher viscosity under low partial pressure of condensation byproducts in order to achieve a high degree of polymerization. The low partial pressure of byproducts can be achieved by either operating under vacuum or by using an inert purge gas, e.g., N2, under super or subatmospheric pressure. It has been shown that the conventional vertical agitated reactor cannot provide sufficient surface renewal and mass transfer rate as the process fluid becomes more and more viscous in the later stages of polymerization. The specially designed horizontal polycondensation reactor can provide excellent mass transfer rate for a highly viscous process fluid, but it is expensive equipment.

A conventional draft tube reactor will improve fluid circulation to the liquid surface; however, surface renewal rate is not very high with a conventional draft tube reactor because the interfacial area between vapor and liquid remains the same as without the draft tube. Furthermore, the conventional draft tube must be completely submerged under the liquid level which limits the operating liquid level and variable throughputs.

The concept of a slotted draft tube reactor as disclosed herein overcomes these disadvantages. This improved reactor system includes at least five features:
(1) The vapor-liquid surface renewal rate of the process fluid is increased by forcing fluid circulation to the top of the vessel, similar to a conventional draft tube.
(2) The draft tube prevents bypassing of inlet material going directly to the outlet by forcing the inlet material to travel through all of the mixing mechanism before reaching the outlet, similar to a conventional draft tube.
(3) The slots on the draft tube generate substantially more vapor-liquid surface area per path of fluid circulation by forcing process fluid to pass through the elongated slots and form thin vertical slabs of process fluid, a significant improvement over a conventional draft tube.
(4) The slots on the draft tube allow the reactor to operate at various liquid levels as long as the slots remain partially submerged. This cannot be accomplished by a conventional draft tube since it must be completely submerged in the process fluid.
(5) The improved system is simple and does not create new problems such as entrainment into the vapor phase or creating stagnant regions in the reactor which can lead to reliability or product quality problems.

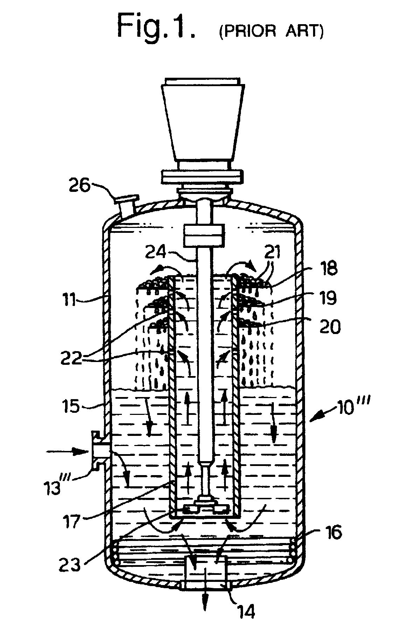

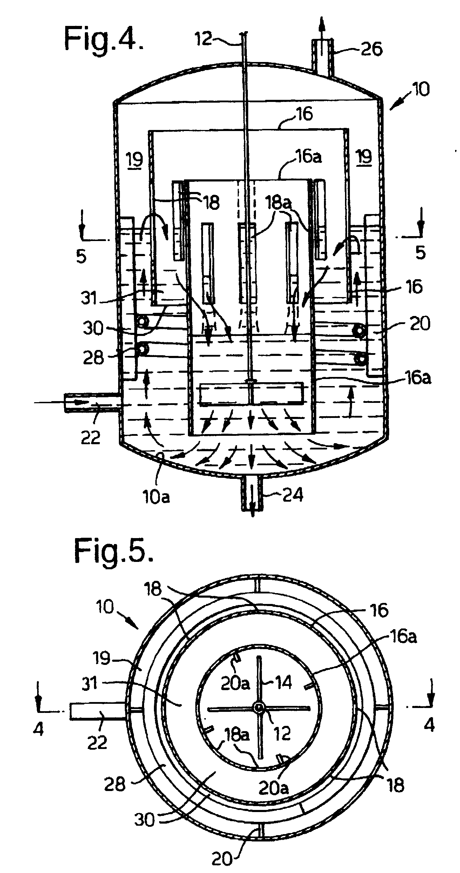

In the prior art (Fig. 5 of the '940 patent, as shown in Fig. 1 herein), the improvement comprises a draft tube, partially immersed vertically in the process fluid, the non-immersed end of the tube having at least one annular plate on the periphery thereof which overhangs, and preferably is inclined towards, the process fluid; and an impeller, located within the draft tube for propelling the process fluid up the draft tube and over the plate. The reactor preferably comprises a plurality, most preferably three, of annular, parallel, perforated, spaced apart plates on the periphery of the non-immersed end of the draft tube, the draft tube having apertures therethrough in the area between the plates and in the area between the process fluid and the plate closest to the immersed end of the draft tube, for feeding process fluid. The prior art '940 patent includes some elements and features which are similar to the instant invention:
(1) Both reactors are for continuous polymerization and, more specifically, or polyesters.
(2) The objective in each is to increase vapor-liquid mass transfer rate by creating a large vapor-liquid surface.
(3) Two cf four embodiments in the '940 patent have an agitator and a draft tube, which is partially submerged in process fluid and has apertures around the periphery near the top of the draft tube from which process fluid overflows.

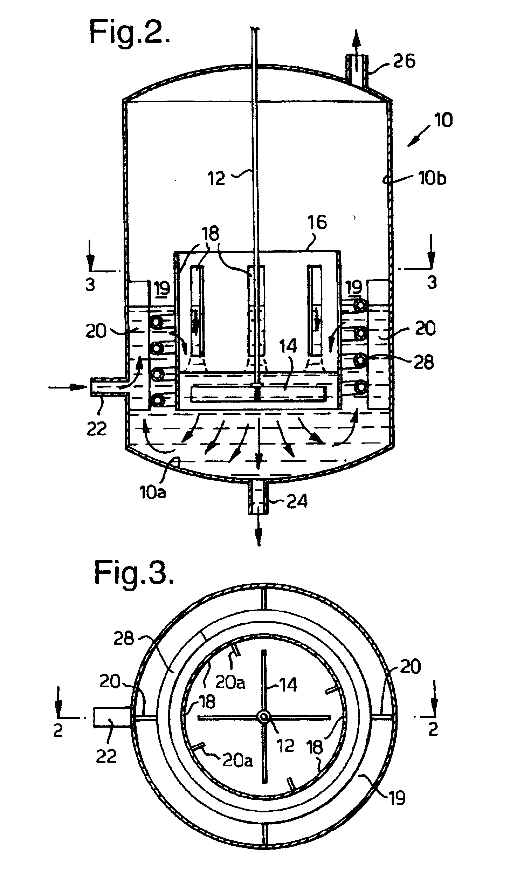

However, notwithstanding the above similarities, there are major differences between the instant invention and the '940 patent. The following discussion elucidates these differences. In addition, the advantages of the instant invention over the '940 patent due to these differences are also discussed.
(1) The means for generating vapor-liquid surfaces:
   The '940 patent relies on either a spray or multiple, horizontal, perforated plates progressively overhanging one another to generate vapor -liquid surfaces in the form of discrete liquid droplets. First of all, spray nozzles do not function well to produce a high surface area with a highly viscous process fluid. Furthermore, both the spray nozzles and perforated plates are prone to fouling of reactor surfaces because these surfaces are exposed to the condition of alternating between wet and dry environments. These fouling surfaces produce degraded polymers because process fluid sticks to the surfaces, resulting in long exposure time at high temperature. Additionally, the spray nozzle and the perforations on the horizontal plates are small passages and are prone to plugging. Entrainment of small polymer droplets by either means can also cause fouling in the vapor phase overhead system.
   The instant invention, on the other hand, relies on slots in the draft tube to generate vapor-liquid surfaces in the form of continuous liquid jets. It does not produce liquid droplets which could be entrained and lead to fouling in the reactor and in the vapor phase overhead system. The slots of the instant invention are less likely to plug up because they are much larger openings than either the spray nozzle openings or the perforations on the plates in the '940 patent. The instant invention provides major advantages in both reliability and product quality over the '940 patent by reducing fouling and plugging tendency.
(2) The function of apertures around the draft tube:
   Two of four '940 embodiments include a draft tube with apertures. The purpose of these apertures around the draft tube in the '940 patent is to pass the process fluid from the draft tube to the external horizontal plates having perforations through which the process fluid rains down and the vapor-liquid surfaces are generated in the form of discrete liquid droplets. The apertures (slots) around the draft tube in the instant invention are used for generating vapor-liquid surface directly as process fluid passes through the slots in the form of continuous liquid jets.
(3) The direction of liquid pumping:
   In the two '940 embodiments which include a draft tube, the process fluid is pumped upward in the draft tube. In the instant invention, the process fluid is pumped down and out the bottom of the draft tube. The instant invention has a major advantage in reducing product bypassing of the reactor compared to the prior art. In the instant invention, the inlet material must rise in the annulus, pass through the slots, down the draft tube, and pass through the impeller before seeing the outlet (at the bottom of the vessel). In the '940 patent with the single-staged draft tube (e.g., Fig. 1 herein), the inlet material will move downward and can bypass all mixing mechanisms and go directly to the outlet. The bypass of the inlet material directly to outlet products in this '940 embodiment significantly degrades product quality. Because of this disadvantage, the preferred embodiment of the '940 patent with a draft tube includes an additional annular wall to separate inlet and outlet into two stages, e.g., Figure 1 of the '940 patent. However, the two-stage system comes with a price in that the first stage is separated from the agitation and circulation pattern produced by the impeller, and has very little mixing and mass transfer. Thus, the first stage in the prior art, e.g., Figure 1 of the '940 patent, is not an efficient use of reactor volume. Furthermore, the inlet material is exposed to very little mixing in the first stage, moves downwards in the second stage and can bypass all mixing mechanisms in the second stage and go directly to the outlet. Thus, the preferred two-stage option, Figure 1 in the '940 patent, does not solve the problem of inlet material bypassing to outlet products. The instant invention provides major advantages in product quality over the '940 patent by reducing product bypassing.
(4) Stagnant zone:
   In all four of the '940 embodiments, areas of stagnant (low-mixing) regions exist resulting in uncontrolled long residence time of process fluid under reaction temperature. This increases polymer degradation leading to a lower quality product. The instant invention keeps the entire process fluid well mixed and does not have stagnant regions. The instant invention provides major advantages in product quality over the '940 patent by eliminating stagnant regions.
(5) Temperature uniformity:
   In all four of the '940 embodiments, process fluid is exposed to a higher temperature variation within the reactor due to the existence of stagnant regions, leading to a lower product quality. The instant invention does not have stagnation areas and thus temperature within the process fluid is much more uniform. The instant invention provides major advantages in product quality over the '940 patent by keeping a more uniform temperature in the reactor.
(6) High shearing:
   Two of the '940 embodiments (Figs. 3 and 4 of the '940 patent) include a circulation pump and a nozzle at which process fluid is exposed to high shear leading to product degradation. In the instant invention the product is not exposed to high shear. The highest shearing occurs at the impeller which is much lower than the pump or the nozzle. The instant invention provides major advantages in product quality over the '940 patent by not exposing process fluid to high shearing.

Referring now to Figures 2 and 3, the first embodiment of the instant invention comprises a reactor 10, a draft tube 16 with windows or slots 18 cut therein, and an impeller 14 mounted axially inside the draft tube 16.

The instant invention's improvement comprises slots 18 cut out from selected portions of the draft tube 16. The impeller 14 forces and directs process fluid within the draft tube 16 in a generally downward direction to the bottom thereof where it exits the lower confines of the draft tube into the bottom portion of the reactor 10. Some of the process fluid exits the reactor 10 through outlet 24 as products; the majority, however, bounces off the bottom surface 10a of the reactor and is forced upward into the annulus 19 formed between the reactor wall 10b and the draft tube 16 wall. The process fluid then passes through the draft tube slots 18 back into the interior of draft tube 16 for completion of the cycle as shown by the arrows.

The first embodiment is shown generally as 10 in Figures 2 and 3. An impeller 14 having a drive shaft 12 connected to a suitable driving means (not shown) such as an electric motor, provides the means for mixing process fluid within the reactor 10. The figures show, for ease of illustration, the first embodiment as having just a single impeller 14. It will be appreciated, however, by those skilled in the art that the impeller 14 may include a combined impeller system with a number of impellers of various types, as long as the combined impeller system forces and directs process fluid in a generally downward direction. A draft tube 16 surrounds the impeller 14 and shaft 12 and is fixedly secured to the reactor 10 walls by suitable means (not shown) such as by braces welded between the reactor 10 and draft tube 16. Feed materials from esterification or prepolymerization stages are injected into the reactor 10 by means of an inlet 22. The impeller 14 forces and directs process fluid inside the draft tube 16 in a generally downward direction as shown by the arrows in Figure 2 indicating the general circulation pattern of the process fluid. Some process fluid is withdrawn as products through the product outlet 24. Most of the process fluid, however, bounces off the bottom of the reactor floor 10a, and is directed upward in the annulus 19 formed between the draft tube 16 and the reactor wall 10b. Wall baffles 20 are positioned in the annulus 19 to reduce the swirling motion of process fluid generated by the rotation of the impeller 14. Additional wall baffles 20a can be added inside the draft tube 16 to reduce swirling. The upward flowing process fluid in the annulus 19 passes through the windows or slots 18 in draft tube 16 and into the interior of the draft tube 16. As stated above, the impeller 14 forces and directs process fluid inside the draft tube 16 in a generally downward direction thereby completing the cycle. If heating or cooling is required by the process, heat exchange coils 28 can be added to the wall baffle 20 and/or the draft tube 16.

The slots 18 are generally vertical, elongated windows cut into the upper part of the draft tube 16. The number and the size of the slots 18 are determined by the circulation rate generated by the impeller 14. The level of process fluid in the annulus 19 is maintained in the range between the highest and the lowest levels of the openings of slots 18. The level of process fluid inside the draft tube 16 is generally lower than that in the annulus 19. The difference in level allows process fluid to pass through the slots 18. As the process fluid passes through the slots 18, large vapor-liquid surface areas are generated by forming thin vertical slabs of process fluid exposing both sides of the slabs to vacuum (not shown) to remove condensation byproducts as vapor. Reactor vapors are removed from the reactor 10 at outlet 26 for suitable use or treatment using equipment (not shown) well known to those skilled in the art.

Referring now to Figures 4 and 5, a second embodiment of the instant invention comprises a reactor, a draft tube having multiple stages with slots cut into each stage, and an impeller mounted axially inside the draft tube. These figures show, for ease of illustration, an embodiment having two cascaded stages in the draft tube. It will be appreciated, however, by those skilled in the art that more than two stages may be applied.

An impeller 14 having a drive shaft 12 connected to a suitable driving means (not shown) such as an electric motor, provides the means for mixing process fluid within the reactor 10. The figures show, for ease of illustration, the second embodiment as having just a single impeller 14. It will be appreciated, however, by those skilled in the art that the impeller 14 may include a combined impeller system with a number of impellers of various types, as long as the combined impeller system forces and directs process fluid in a generally downward direction. A two-stage draft tube, comprising an outer draft tube 16 and an inner draft tube 16a, surrounds the impeller 14 and shaft 12 and is fixedly secured to the reactor 10 walls by suitable means (not shown) such as braces welded between the reactor wall 10 and the draft tube 16 wall. Feed materials from esterification or prepolymerization stages are injected into the reactor 10 by means of an inlet 22. The impeller 14 forces and directs process fluid inside the inner draft tube 16a in a generally downward direction as shown by the arrows in Figure 4 indicating the general circulation pattern. Some process fluid is withdrawn as products through the product outlet 24. Most of the process fluid, however, bounces off the bottom of the reactor floor 10a, and is directed upward in the reactor annulus 19 between the outer wall of the two-stage draft tube (16 and 16a) and the reactor wall 10b. Wall baffles 20 are positioned in the reactor annulus 19 to reduce the swirling motion of process fluid generated by the rotation of the impeller 14. Additional wall baffles 20a (in Fig. 5) can be added inside the inner draft tube 16a to reduce swirling. The upward flowing process fluid in annulus 19 passes through the first stage windows or slots 18 in the outer draft tube 16 and into annulus 31 formed between the inner and outer draft tubes 16a and 16, respectively. The tube annulus 31 has a sealed bottom 30 forcing the process fluid to pass through the second stage windows or slots 18a in the inner draft tube 16a and into the interior of the inner draft tube 16a. As stated above, the impeller 14 forces and directs process fluid inside the inner draft tube 16a in a generally downward direction thereby completing the cycle. If heating or cooling is required by the process, heat exchange coils 28 can be added to the wall baffle 20 and/or to the draft tube 16 and 16a.

The slots 18 and 18a are generally vertical, elongated windows cut into the upper parts of the outer draft tube 16 and inner draft tube 16a. The number and the size of the slots 18 and 18a are determined by the circulation rate generated by the impeller 14. The level of process fluid in the reactor annulus 19 is maintained in the range between the highest and the lowest levels of the first stage slots 18 openings. The level of process fluid inside the annulus 31 is generally lower than that in the annulus 19. The difference in level allows the process fluid to pass through the first stage slots 18. The level of process fluid in the annulus 31 is also maintained in the range between the highest and the lowest levels of the second stage slot openings 18a which are lower than the first stage slots 18. The level of process fluid inside the inner draft tube 16a is generally lower than that in the annulus 31. The difference in level allows the process fluid to pass through the second stage slots 18a. As the process fluid passes successively through the slots 18 and 18a, large vapor-liquid surface areas are generated by forming thin vertical slabs of process fluid exposing both sides of the slabs to vacuum to remove condensation byproducts as vapor. Reactor vapors are removed from the reactor 10 at outlet 26 for suitable use or treatment using equipment (not shown) which is well known to those skilled in the art.

The perforations 18 and 18a in the upper part of the draft tubes 16 and 16a are shown as being rectangular shapes in the drawings and are referred to herein as "slots" or "windows." It will be appreciated, however, that other forms of perforations, such as pluralities of circular holes or holes of other shapes, can be used to achieve the same objective as long as large vapor-liquid surface areas are generated when process fluid passes through these perforations into the interior of the draft tubes 16 and 16a in the form of continuous liquid jets.

Although the foregoing description is directed to polymerization processes, it will be appreciated by those skilled in the art that the instant invention is also generally applicable to other process operations, such as crystallization and devolatilization, where vapor-liquid mass transfer rate is critical. Accordingly, the invention also provides a process as set out in claim 9.

## Claims

1. A process vessel comprising a vertical, hollow vessel having an inlet for the introduction of feed materials for forming a process fluid, an outlet for the discharge of process product and an exhaust for process vapors; and an inner wall within said vessel, fixedly attached thereto and forming in conjunction therewith at least two process stages, the first stage being disposed in the annulus formed between said inner wall and said vessel with said inlet opening thereinto, the last stage being confined within said inner wall with process product discharging therefrom and toward said outlet; the improvement comprising:
means located within said inner wall for driving said process fluid therein downward toward said discharge outlet; and a plurality of slots selectively located in said inner wall for allowing passage of said process fluid flowing in said annulus between said process vessel wall and said inner wall and into the interior of said inner wall.

2. The process vessel of claim 1 further including second means located within said inner wall, and surrounding said means for driving, said second means including a plurality of slots for allowing passage of said process fluids therethrough.

3. The process vessel of claim 1 further including means for heating or cooling said vessel.

4. The process vessel of claim 1 wherein said means for driving is an impeller system.

5. The process vessel of claim 4 wherein at least one impeller of said impeller system is located near the bottom of said inner wall.

6. The process vessel of claim 1 further including at least one baffle located in said annulus and attached to said process vessel wall for reducing circular flow within said annulus.

7. The process vessel of claim 1 further including at least one baffle located on the interior of said inner wall for reducing circular flow within said inner wall.

8. A process vessel of claim 1 wherein said vessel comprises:
a vertical, hollow vessel having an inlet for the introduction of feed materials for forming a process fluid, an outlet for the discharge of process product and an exhaust for discharging reaction vapors;
a first inner wall within said process vessel and fixedly attached thereto;
at least one additional inner wall located within and fixedly attached to said first inner wall and forming in conjunction therewith at least two process stages, the first stage being disposed in the annulus formed between said first wall and said process vessel with said inlet opening thereinto, the last stage being confined within the last of said at least one additional inner wall with the process product discharging therefrom and toward said discharge outlet;
means located within the last of said at least one additional inner wall for driving said process fluid therein downward and toward said discharge outlet; and
a plurality of slots selectively located in said first and said at least one additional inner wall for allowing passage of said process fluid flowing upward in said annulus between said process vessel wall and said first inner wall, through at least two stages of said plurality of slots in said first and said at least one additional inner wall, and into the interior of the last of said at least one additional inner wall.

9. A polymerization, crystallization and/or devolatization process, wherein the process is conducted in a process vessel as set out in any one of claims 1 to 8.
